(19) Europäisches Patentamt / European Patent Office / Office européen des brevets

(11) **EP 4 708 278 A1**

(12) **EUROPEAN PATENT APPLICATION**
published in accordance with Art. 153(4) EPC

(43) Date of publication:
**11.03.2026 Bulletin 2026/11**

(21) Application number: 24839887.7

(22) Date of filing: **10.05.2024**

(51) International Patent Classification (IPC):
*G09G 5/10* (2006.01)     *G09G 3/20* (2006.01)
*H04N 23/72* (2023.01)

(52) Cooperative Patent Classification (CPC):
**G09G 3/20; G09G 5/10; H04N 23/72**

(86) International application number:
**PCT/KR2024/006390**

(87) International publication number:
**WO 2025/014070 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.07.2023 KR 20230089432**

(71) Applicant: Samsung Electronics Co., Ltd.
Suwon-si, Gyeonggi-do 16677 (KR)

(72) Inventors:
• **KIM, Kyuwon**
  **Suwon-si Gyeonggi-do 16677 (KR)**

• **KIM, Jongkyu**
  **Suwon-si Gyeonggi-do 16677 (KR)**
• **KIM, Hyunsoo**
  **Suwon-si Gyeonggi-do 16677 (KR)**
• **YANG, Chulju**
  **Suwon-si Gyeonggi-do 16677 (KR)**
• **LEE, Heekuk**
  **Suwon-si Gyeonggi-do 16677 (KR)**

(74) Representative: **HGF**
**HGF Limited**
**4th Floor, 1 City Square**
**Leeds LS1 2ES (GB)**

(54) **ELECTRONIC DEVICE AND METHOD FOR DISPLAYING IMAGE, AND COMPUTER-READABLE MEDIUM**

(57) In embodiments, an electronic device is provided. The electronic device may comprise a camera, a display and at least one processor. The at least one processor may be configured to: acquire, through the camera, a first image having first luminance values; acquire a haze level according to a specified sub-ratio of the first luminance values of the first image; and, on the basis of identifying that the haze level is greater than or equal to a threshold, display, through the display, a second image having final luminance values. The final luminance values can be acquired on the basis of: a luminance shift for converting the first luminance values according to a difference between a central luminance level of the first luminance values and a target luminance level; and contrast stretching for scaling an interval between luminance levels from the target luminance level.

OBTAIN FIRST IMAGE HAVING FIRST LUMINANCE VALUES — 501

OBTAIN HAZE LEVEL — 503

DISPLAY SECOND IMAGE HAVING FINAL LUMINANCE VALUES BASED ON IDENTIFYING THAT HAZE LEVEL IS EQUAL TO OR GREATER THAN THRESHOLD — 505

FIG. 5A

EP 4 708 278 A1

## Description

**[Technical Field]**

The present disclosure relates to an electronic device, a method, and a computer-readable medium for displaying an image.

**[Background Art]**

An electronic device may obtain an image through a camera. The electronic device may obtain an image with distorted quality due to an inherent factor in the electronic device, such as a sensor, a display, or a lens. The image obtained through the camera may be displayed through the display.

The above-described information may be provided as a related art for the purpose of helping understanding of the present disclosure. No argument or decision is made as to whether any of the above description may be applied as a prior art related to the present disclosure.

**[Disclosure]**

**[Technical Solution]**

In embodiments, an electronic device is provided. The electronic device may include a camera, a display, and at least one processor. The at least one processor may be configured to obtain a first image having first luminance values through the camera. The at least one processor may be configured to obtain a haze level in accordance with a designated lower ratio of the first luminance values of the first image. The at least one processor may be configured to display, through the display, a second image having final luminance values based on identifying that the haze level is equal to or greater than a threshold. The final luminance values may be obtained based on luminance shift for converting the first luminance values in accordance with a difference between a central luminance level of the first luminance values and a target luminance level, and contrast stretching for scaling an interval between luminance levels from the target luminance level.

In embodiments, a method performed by an electronic device is provided. The method may include obtaining a first image having first luminance values through a camera. The method may include obtaining a haze level in accordance with a designated lower ratio of the first luminance values of the first image. The method may include displaying, through a display, a second image having second luminance values based on identifying that the haze level is equal to or greater than a threshold. The second luminance values may be obtained in the electronic device based on luminance shift for converting the first luminance values in accordance with a difference between a central luminance level of the first luminance values and a target luminance level, and contrast stretching for scaling an interval between luminance levels from the target luminance level.

In embodiments, a non-transitory computer-readable medium is provided. The non-transitory computer-readable medium may include memory storing instructions. The instructions, when executed by a processor, may cause an electronic device to obtain a first image having first luminance values through a camera, obtain a haze level in accordance with a designated lower ratio of the first luminance values of the first image, and display, through a display, a second image having final luminance values based on identifying that the haze level is equal to or greater than a threshold. The final luminance values may be obtained in the electronic device based on luminance shift for converting the first luminance values in accordance with a difference between a central luminance level of the first luminance values and a target luminance level, and contrast stretching for scaling an interval between luminance levels from the target luminance level.

In embodiments, an electronic device is provided. The electronic device may include a camera, a display, and at least one processor. The at least one processor may be configured to obtain a first image having first luminance values through the camera. The at least one processor may be configured to obtain a haze level in accordance with a designated lower ratio of the first luminance values of the first image. The at least one processor may be configured to identify whether the haze level is equal to or greater than a threshold. The at least one processor may be configured to display, through the display, the first image, in a case that the haze level is less than the threshold. The at least one processor may be configured to display, through the display, a second image having final luminance values, in a case that the haze level is equal to or greater than the threshold. The lowest luminance level among luminance levels of the final luminance values may be lower than luminance levels of the first luminance values. A luminance level range of the final luminance values may be wider than a luminance level range of the first luminance values.

In embodiments, an electronic device may include a camera, a display, at least one processor, and memory storing instructions. The instructions, when executed by the at least one processor, cause the electronic device to obtain a first image having first luminance values through the camera, obtain a haze level in accordance with a designated lower ratio of the first luminance values of the first image, and display, through the display, a second image having final luminance values based on identifying that the haze level is equal to or greater than a threshold. The final luminance values may be obtained based on luminance shift for converting the first luminance values in accordance with a difference between a central luminance level of the first luminance values and a target luminance level, and contrast stretching for scaling an interval between luminance levels from the target luminance level.

## [Description of the Drawings]

FIG. 1 is a block diagram of an electronic device in a network environment.

FIG. 2 is a block diagram exemplifying a camera module.

FIG. 3 represents an example of a haze phenomenon.

FIG. 4 represents an example of a graph for luminance of an image.

FIG. 5A represents an operation flow of an electronic device for image processing.

FIG. 5B represents an operation flow of an electronic device for luminance change.

FIG. 6A represents an example of a graph in accordance with luminance shift.

FIG. 6B represents images in accordance with luminance shift.

FIG. 6C represents an example of a conversion method for luminance limitation.

FIG. 7 represents a relationship between luminance and red green blue (RGB) channels.

FIG. 8A represents an example of a graph in accordance with contrast stretching.

FIG. 8B represents images in accordance with contrast stretching.

FIG. 9 represents an example of an animation of image processing.

FIG. 10 represents an example of a user interface for image processing.

FIG. 11A represents an operation flow of an electronic device for dithering.

FIG. 11B represents an operation flow of an electronic device for weight processing.

FIG. 12 represents sharing of parameters for image processing.

## [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to brightness (e.g., brightness, luminance, a luminance value, a luminance level, shade, or contrast), a term referring to a value (e.g., a level, a threshold, a range, a value, or a region), a term for a calculation state (e.g., a step, an operation, or a procedure), a term referring to a network entity, a term referring to a component of a device, and the like used in the following description are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

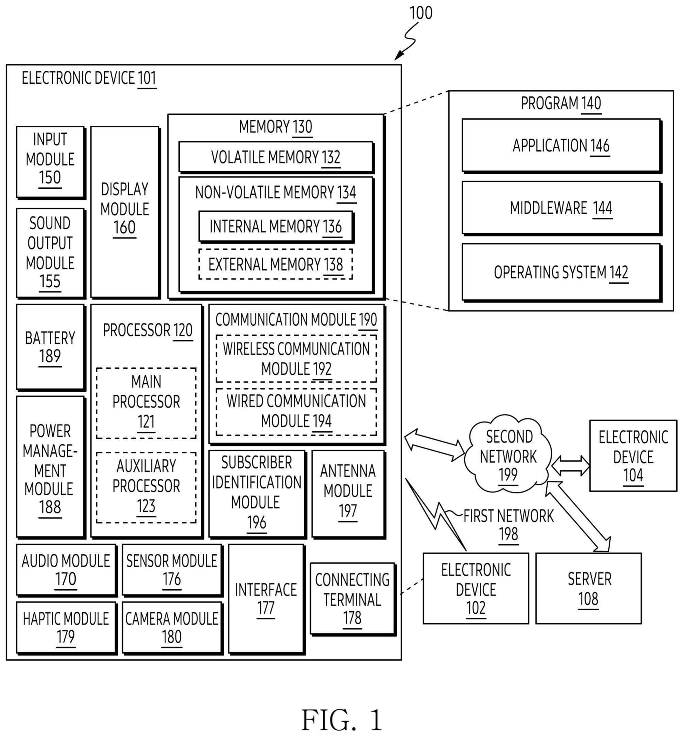

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning.

The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101.

The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

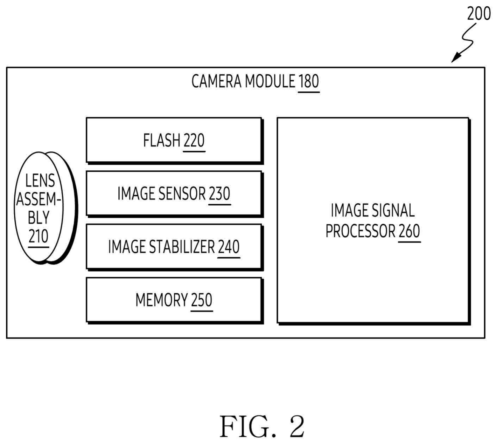

Fig. 2 is a block diagram 200 illustrating the camera module 180 according to various embodiments.

Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

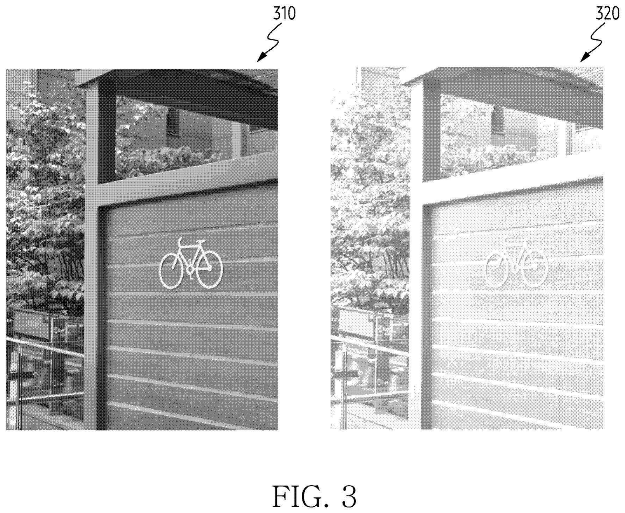

FIG. 3 represents an example of a haze phenomenon. The haze phenomenon means a phenomenon in which a lens surface of a camera (e.g., a camera module 180) becomes clouded due to dust, moisture, oil, and the like. Since a substance on the lens surface diffuses and scatters light, it causes a phenomenon in which a white layer appears to cover an image overall. For example, in a case that a camera is disposed under a display, a substance such as oil or a fingerprint on the display may affect a captured image. For example, since a foreign substance (oil or a fingerprint) serves a role of scattering light entering a lens, it may include a phenomenon in which at least a part of an image obtained through the lens appears blurred.

Referring to FIG. 3, a first image 310 represents an image without a haze phenomenon, and a second image 320 represents an image with the haze phenomenon. In the haze phenomenon, as overall brightness of an image increases, it may be difficult to properly represent a dark region of the image. Each pixel of pixels of the first image 310 has a luminance value. For example, the first image 310 may have first luminance values. Each pixel of pixels of the second image 320 has a luminance value. For example, the second image 320 may have second luminance values. By comparing the first image 310 and the second image 320, it may be confirmed that the second image 320 is brighter than the first image 310. For example, it may be confirmed that an average of luminance levels of the second luminance values is higher than an average of luminance levels of the first luminance values. For pixels at the same location, a luminance value of the second image 320 may be higher than a luminance value of the first image 310.

As a region that should be represented relatively dark is brightly represented due to the haze phenomenon, distortion may occur in an image obtained through a camera. Furthermore, as a bright region occurs contrary to an intention, an object may not be clearly represented in an image. Hereinafter, in the present disclosure, techniques for detecting the haze phenomenon and changing luminance values of an image to process the image with the haze phenomenon are described.

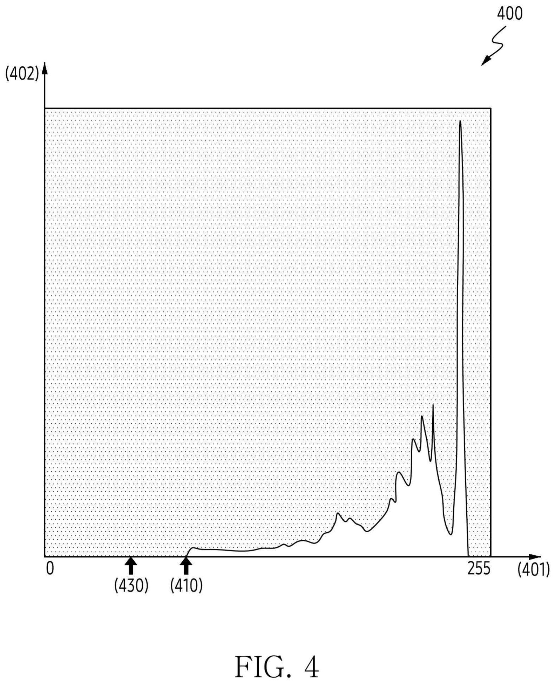

FIG. 4 represents an example of a graph for luminance of an image. An image may include a plurality of pixels. Each pixel of the plurality of pixels may have a luminance value. The luminance value means a luminance level within a designated range (e.g., 0 to 255). For example, the luminance value may represent a degree of brightness per unit area. A histogram for luminance represents distribution of luminance values. The histogram represents a frequency of each luminance level, and for example, as an image becomes brighter, a frequency of a higher luminance level may increase. A frequency of a luminance level may be referred to as a count, a frequency value, a signal frequency, or a technical term equivalent thereto.

Referring to FIG. 4, a graph 400 represents distribution of luminance values of pixels of an image. The graph 400 may be a frequency graph in which the distribution of the luminance values is indicated as a histogram and then a distribution result is continuously represented. A horizontal axis 401 of the graph 400 represents a luminance level, and a vertical axis 402 of the graph 400 represents a frequency. The frequency, which is distribution of data of the histogram, represents the number of pixels having a corresponding latitude level. For example, the luminance level may have a range of [0, 255]. Luminance values of the image are distributed between luminance levels equal to or greater than 0 and equal to or less than 255. According to the distribution, the graph 400 may be represented.

A haze phenomenon means a phenomenon in which an image obtained through a camera (e.g., a camera module 180) appears cloudy. As light diffuses and scatters, pixels of the image become bright overall. For example, luminance values of the image obtained through the camera may be generally formed to be high overall. In order to determine whether the haze phenomenon occurs in an image, an electronic device 101 may compare a minimum luminance level of luminance values of the image or a luminance level of a lower region of the luminance values with a threshold level. For example, if brightness of the darkest region in the image is brighter than brightness of the threshold level, the electronic device 101 may identify that the haze phenomenon exists in the image. A luminance level for comparison with the threshold level may be referred to as a haze level, a haze index, or a technical term equivalent thereto.

The electronic device 101 may obtain a YUV format of the image obtained through the camera. Unlike an RGB format representing three primary colors of light (e.g., red, green, and blue), the YUV format may display a color space through luminance (a Y channel) representing brightness and signals (a U channel and a V channel) representing a color. The electronic device 101 may obtain luminance values of the Y channel, for example, a luminance channel, in the YUV format. For example, the electronic device 101 may obtain luminance values having the same distribution as the graph 400. The electronic device 101 may identify a haze level 410, which is a luminance level that is a criterion of a dark region. According to an embodiment, the electronic device 101 may determine the lowest level among luminance levels of luminance values as the haze level 410.

For example, an index of the darkest bin in the graph 400 may be determined as the haze level 410. The bin represents the number of data for each section of the histogram. For example, the bin may represent continuous, non-overlapping interval of a variable. According to an embodiment, two bins (e.g., steps and intervals) may be adjacent to each other, and sizes of the two bins may be the same. For example, a haze level determination unit of the electronic device 101 may determine whether clouding is present by determining the index of the darkest bin of the Y channel (luminance) as a haze index. According to an embodiment, the electronic device 101 may determine a haze level in accordance with a designated lower ratio among luminance values as the haze level 410. For example, luminance values of pixels are arranged in an ascending order, and an index of a bin in which the accumulated pixel number is lower $\alpha\%$ (e.g., 0.03%) in the graph 400 may be determined as the haze level 410. The electronic device may compare the haze level 410 with a threshold level 430. The threshold level 430 represents an index that is a criterion for recognizing the haze phenomenon in an image. For example, a luminance level corresponding to lower 10% among all luminance levels may be set to the threshold level 430. As an example, when luminance levels have a value equal to or greater than 0 and equal to or less than 255, a luminance level of 24 corresponding to the lower 10% may be set as the threshold level 430.

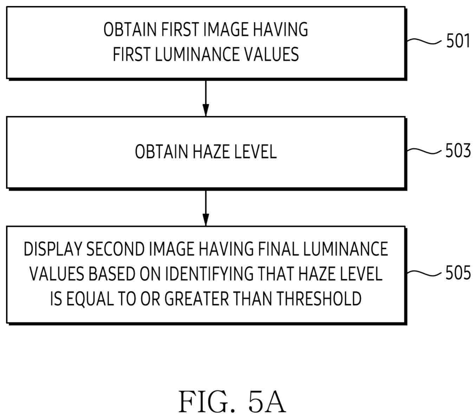

FIG. 5A represents an operation flow of an electronic device (e.g., an electronic device 101) for image processing.

Referring to FIG. 5A, in operation 501, the electronic device 101 may obtain a first image having first luminance values. The electronic device 101 may obtain the first image through a camera (e.g., a camera module 180). Each pixel of pixels of the first image may have a luminance value. The pixels of the first image may have the first luminance values. For example, the pixels may represent an entire region of the first image. For another example, the pixels may represent a partial region of the first image. Hereinafter, in the present disclosure, the pixels of the first image may be a set of units configuring an entire or partial region of the first image. The electronic device 101 may obtain the first luminance values of the first image.

In operation 503, the electronic device 101 may obtain a haze level. The haze level represents a luminance level of a low luminance value among the first luminance values. Each of the first luminance values has a luminance level. The first luminance values may include the low luminance value. The luminance level corresponding to the low luminance value may be referred to as the haze level of FIG. 4. For example, the low luminance value may represent the lowest luminance value among the first luminance values. According to an embodiment, the electronic device 101 may determine a luminance level located at the lowest among the plurality of luminance levels as the haze level. In other words, the electronic device 101 may determine a luminance value of a pixel having the darkest brightness (e.g., having the lowest luminance value) among the pixels of the first image as the low luminance value. This is because the luminance level having the darkest brightness may be used as a measure indicating whether overall brightness of the first image is dark or bright. According to an embodiment, the electronic device 101 may determine a luminance level of a luminance value corresponding to a designated lower ratio among the first luminance values as the haze level. For example, when the first luminance values are arranged in an ascending order, the electronic device 101 may determine a luminance value of a pixel in which the accumulated pixel number is lower $\alpha$% (e.g., 0.03%) as the low luminance value. For example, this is because determining existence or absence of a haze phenomenon based solely on a pixel having minimum luminance may lead to an inaccurate result, if only one pixel of the pixels of the first image is excessively dark compared to other pixels. The luminance level may be referred to as the haze level described in FIG. 4.

In operation 505, the electronic device 101 may display a second image having final luminance values based on identifying that a haze level is equal to or greater than a threshold. The electronic device 101 may identify whether the haze level is equal to or greater than the threshold. The threshold may represent a luminance level, which is a criterion for identifying a haze phenomenon. The threshold may be referred to as a threshold level. According to an embodiment, the threshold level may be determined as a level corresponding to a certain ratio of possible luminance levels. For example, the luminance level may be equal to or greater than 0 and equal to or less than 255, and the certain ratio may be 10%. The threshold level may be determined as a luminance level of 24. According to another embodiment, the threshold level may be determined in accordance with a type of hardware. For example, the electronic device 101 may set the threshold level based on a type of camera used to capture the first image. For example, the electronic device 101 may set the threshold level based on a type of display disposed above the camera. According to still another embodiment, the threshold level may be determined in accordance with a location (e.g., country or city) of the electronic device 101. For example, if a white night phenomenon occurs in a specific region, the threshold level of the electronic device 101 located in the specific region may be set higher than a default value. For another example, if a polar night phenomenon occurs in a specific region, the threshold level of the electronic device 101 located in the specific region may be set lower than the default value. According to still another embodiment, the threshold level may be determined based on a brightness value outside the electronic device measured by a sensor (e.g., a brightness detection sensor, a proximity sensor, a geomagnetic sensor, and the like) of the electronic device 101.

According to an embodiment, in a case that the haze is greater than or equal to the threshold, the electronic device 101 may determine that the haze phenomenon exists in the first image.

According to an embodiment, the electronic device 101 may generate the second image based on the first image in order to solve a problem of distorted quality due to the haze phenomenon. A contaminant on a camera window or a lens not only scatters light, but also interferes with propagation of light, thereby reducing color fidelity. For example, the haze phenomenon causes a low contrast problem that narrows a representation section in each channel (e.g., an R channel, a G channel, and a B channel of RGB) of the image. The electronic device 101 may perform operations to be described later to convert an image (e.g., the first image of FIG. 5A) into high contrast.

According to an embodiment, the electronic device 101 may perform luminance shift and contrast stretching for the first luminance values of the first image. According to an embodiment, contrast stretching (e.g., contrast expansion, luminance amplification, and contrast difference expansion (contrast enhancement)) means spreading a contrast range of a contrast of an image through digital processing. For example, it may include expanding the contrast to a contrast range within a range that may be displayed on a display of the electronic device.

For example, the electronic device 101 may obtain the final luminance values based on the luminance shift and the contrast stretching for the first luminance values. The final luminance values may be related to pixels of the first luminance values. The pixels of the first image may correspond to the pixels of the second image. For example, the pixels may represent an entire region of the second image. For another example, the pixels may represent a partial region of the second image. Hereinafter, in the present invention, the pixels of the second image may be a set of units configuring an entire or partial region of the second image. The electronic device 101 may perform the luminance shift and the contrast stretching for an entire region or for a specific region (e.g., a face region, a background region, or a region of interest) of an image to improve the haze phenomenon.

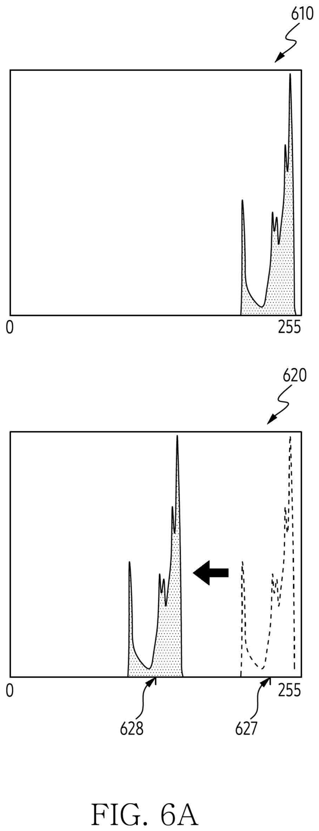

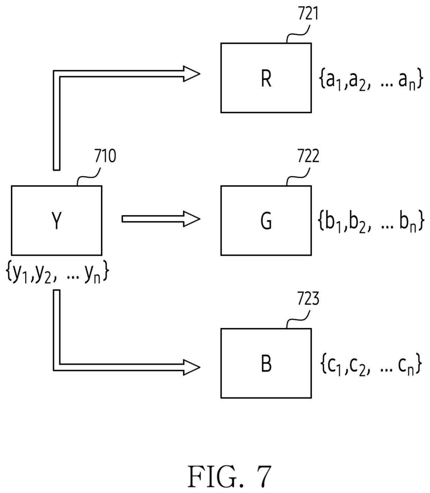

The luminance shift is described in detail with reference to FIGS. 6A to 6C. The contrast stretching is described in detail with reference to FIGS. 7 to 8B. According to an embodiment, the electronic device 101 may generate the second image having the final luminance values. The electronic device 101 may display the second image on the display (e.g., a display module 160).

In FIG. 5A, an embodiment for detecting the haze phenomenon based on the haze level has been described, but embodiments of the present disclosure are not limited thereto. According to an embodiment, the electronic device 101 may detect the haze phenomenon in an image based on distribution of luminance values of the image. If luminance values of pixels in the image increase overall as light is scattered or absorbed, the luminance values may be concentrated in a region of a high luminance level. If variance of the first luminance values is less than a variance threshold value, the electronic device 101 may display the second image having the final luminance values. The variance threshold value may represent a criterion for determining whether the haze phenomenon exists in the image. This is because the luminance values are concentrated in the region of the high luminance level, if the haze phenomenon exists in the image. For example, if a degree to which the first luminance values are spread is less than the variance threshold value, the electronic device 101 may confirm that distribution of the first luminance values is dense. The electronic device 101 may perform the contrast stretching corresponding to identifying the first luminance values having the variance less than the variance threshold value.

Although not illustrated in FIG. 5A, if the haze level is less than the threshold, the electronic device 101 may determine that the haze phenomenon does not exist in the first image. The electronic device 101 may display the first image on the display (e.g., the display module 160).

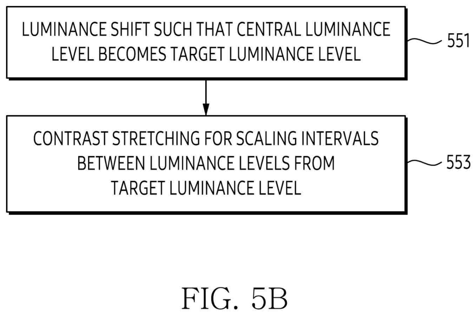

FIG. 5B represents an operation flow of an electronic device (e.g., an electronic device 101) for luminance change. Operations for changing the luminance may be related to the operation 505 of FIG. 5A.

Referring to FIG. 5B, in operation 551, the electronic device 101 may perform luminance shift such that a central luminance level becomes a target luminance level. In addition to the luminance shift, the luminance shift may be referred to as exposure shift or a technical term equivalent thereto. The electronic device 101 may identify a central luminance level of first luminance values of a first image. The central luminance level represents an intermediate value of a luminance level range of the first luminance values. For example, in a case that the luminance level range of the first luminance values is {89, 90, 91, 92, 93}, 91 may be the central luminance level. For another example, in a case that the luminance level range of the first luminance values is {90, 91, ..., 172, 173}, 132.5 may be the central luminance level. An average of a minimum luminance level and a maximum luminance level in the luminance level range may be determined as the central luminance level. For still another example, in a case that a plurality of luminance levels of the first luminance values are {76, 91, ..., 172, 173}, 124 or 125 may be the central luminance level. For example, a luminance level closest to a center of the plurality of luminance levels of the first luminance values may be the central luminance level.

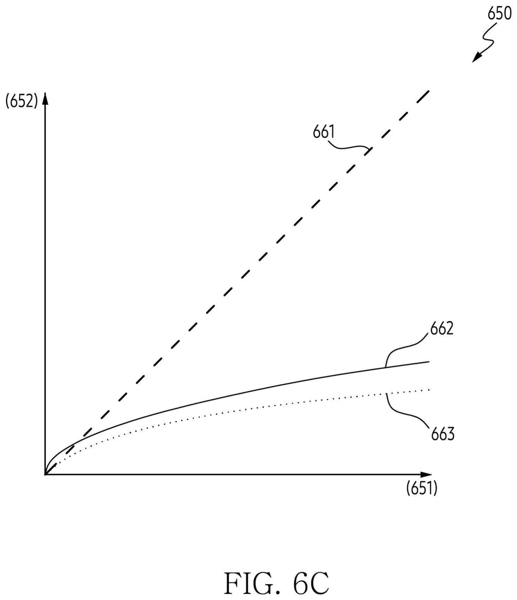

The electronic device 101 may identify a target luminance level. According to an embodiment, the target luminance level may be an intermediate value of a possible luminance level range. As an example, in a case that the range of the luminance level is equal to or greater than 0 and equal to or less than 255, the target luminance level, which is a predetermined value, may be 128. According to an embodiment, the target luminance level may be set based on the central luminance level of the first luminance values of the first image. According to an embodiment, the electronic device 101 may perform an operation of shifting a luminance value such that the central luminance level matches the target luminance level by changing the luminance value of each of the pixels in accordance with a difference between the central luminance level and the target luminance level. For example, luminance values of pixels may be changed such that the central luminance level reaches the target luminance level. In accordance with this luminance shift, the luminance values of the pixels may be drastically changed. If the luminance values are rapidly changed, a discrepancy between an original image (e.g., the first image) and a changed image (e.g., a second image) may be caused. Therefore, the electronic device 101 may set a limit on an amount of change from the central luminance level. That is, the electronic device 101 may limit a degree of luminance shift. The electronic device 101 may identify a predetermined luminance level (e.g., 128). The electronic device 101 may determine a difference (hereinafter, a first difference) between the predetermined luminance level and the central luminance level. The electronic device 101 may determine a luminance shift value (hereinafter, a second difference) based on the first difference. The electronic device 101 may obtain the second difference based on the first difference and a designated conversion method. For example, the designated conversion method may include $y=sqrt(x)$. For example, the designated conversion method may include $y=ln(x+1)$. As the first difference increases, a degree to which the luminance shift value increases may vary. For example, a slope of the luminance shift value for the first difference may decrease as the first difference increases. For another example, the designated conversion method may include $y=x$. A description of a limit of the luminance shift is described through FIG. 6C.

According to an embodiment, the electronic device 101 may perform luminance shift for the first luminance values such that the central luminance level becomes the target luminance level. For example, the electronic device 101 may perform the luminance shift such that a center of the luminance level range (wherein the luminance level range represents from the minimum luminance level to the maximum luminance level) of the first luminance values becomes the target luminance level. According to an embodiment, the electronic device 101 may shift the first luminance values by the luminance shift value, which is the difference between the central luminance level and the target luminance level. For example, each of the luminance values of the pixels may be changed in accordance with the difference between the central luminance level and the target luminance level. According to an embodiment, the electronic device 101 may convert each luminance value of the first luminance values by the luminance shift value. For example, the electronic device 101 may obtain second luminance values by shifting the first luminance values based on the luminance shift value.

In operation 553, according to an embodiment, the electronic device 101 may perform contrast stretching for scaling an interval between luminance levels from the target luminance level. According to an embodiment, the electronic device 101 may obtain the second luminance values if it performs the luminance shift for the first luminance values of at least one pixel included in the first image. For example, since the luminance shift shifts each of luminance values by the same size, a size of a luminance level range of the second luminance values is equal to a size of the luminance level range of the first luminance values. According to an embodiment, luminance of pixels having a specific luminance value may not be shifted when performing pixel shift. For example, a pixel corresponding to a black having very low luminance may be excluded from a luminance value change object. A luminance level range represents from a minimum luminance level to a maximum luminance level among luminance levels of luminance values. A size of the luminance level range may mean a difference between the maximum luminance level and the minimum luminance level. The size of the luminance level range may represent a degree of contrast representing an image. For example, if a luminance level range of an original image is narrow, for example, if the difference between the minimum luminance level and the maximum luminance level is small, a luminance level range of a changed image does not change even if luminance shift is performed. For example, in a case that a luminance level range of an image is narrow, an additional operation may be performed to solve a low contrast problem which causes a representation section of each channel configuring the image to be low, even if luminance shift is performed. According to an embodiment, in order to solve the low contrast problem caused by a haze phenomenon, the electronic device 101 may perform contrast stretching for a high contrast effect. For example, the electronic device 101 may perform contrast stretching such that the interval between the luminance levels increases centered on the target luminance level. As the interval between the luminance levels increases, a degree of contrast that may be represented increases, and thus a contrast ratio lowered due to the haze phenomenon may increase.

The electronic device 101 may obtain third luminance values through contrast stretching for the second luminance values based on the luminance shift value. The electronic device 101 may convert the second luminance values into the third luminance values based on a scaling value. The electronic device 101 may determine the scaling value. According to an embodiment, the electronic device 101 may determine the scaling value such that a brightness region corresponding to an upper ratio (e.g., upper β%) is not saturated when performing the contrast stretching. According to another embodiment, the electronic device 101 may determine the scaling value based on a change in RGB channels. A change in a luminance value causes a change in an RGB value of a corresponding pixel. If the luminance levels are stretched for a high contrast effect, RGB values of pixels whose luminance values are changed are also changed. The high contrast effect may represent, for example, increasing clarity of an image by expanding values of a contrast to as high as possible through digital processing such that the contrast in the image may be utilized to the most.

At this time, if saturation occurs in an RGB value due to excessive change in luminance, an image may be distorted, and thus the electronic device 101 may may identify in advance whether the saturation occurs in the RGB channels for contrast stretching. The electronic device 101 may identify a scaling range that prevents the saturation from occurring in the RGB channels. The electronic device 101 may determine a scaling value within the scaling range. According to still another embodiment, the electronic device 101 may determine a predetermined value as the scaling value.

The electronic device 101 may perform contrast stretching based on the scaling value. A range of luminance levels of the third luminance values may be wider than a range of luminance levels of the second luminance values. For example, the highest luminance value among the luminance levels of the third luminance values is greater than the highest luminance value among the luminance levels of the second luminance values. The lowest luminance value among luminance levels of the third luminance values is smaller than the lowest luminance value among luminance levels of the second luminance values. That is, when luminance distribution is represented as a graph or a histogram, the third luminance values may be spread out more to left and right centered on the target luminance level than the second luminance values.

The operations of image processing described through FIGS. 5A to 5B may be automatically performed in the electronic device 101. For example, it may represent that operations of initiating a luminance change or converting luminance values after identifying that the haze phenomenon exists are not performed by a user input or an external signal, but are instead performed in the electronic device 101 without separate user intervention in response to obtaining the first image through a camera. According to an embodiment, the electronic device 101 may obtain a haze level in response to obtaining the first image. In response to obtaining the haze level, the electronic device 101 may identify that the haze level is equal to or greater than a threshold. According to an embodiment, the electronic device 101 may obtain final luminance values in response to identifying that the haze level is equal to or greater than the threshold. According to an embodiment, the electronic device 101 may be configured to obtain converted luminance values without a user intervention for indicating luminance shift or contrast stretching.

FIG. 6A represents an example of a graph in accordance with luminance shift. In order to describe the luminance shift, the description of the operation 551 of FIG. 5B may be referenced.

Referring to FIG. 6A, a graph 610 represents distribution of luminance values (e.g., first luminance values) of an original image (e.g., a first image). The graph 610 is a frequency graph indicating the distribution of the first luminance values as a histogram and then continuously representing a distribution result, and a horizontal axis represents a luminance level and a vertical axis represents a frequency. According to an embodiment, a graph 620 represents distribution of luminance values (e.g., second luminance values) for which process in accordance with luminance shift is performed. The graph 620 is a frequency graph indicating the distribution of the second luminance values as a histogram and then continuously representing a distribution result, and a horizontal axis represents a luminance level, and a vertical axis represents a frequency.

According to an embodiment, an electronic device 101 may identify a central luminance level 627 of the first luminance values of the first image. The central luminance level represents an intermediate value of a luminance level range of the first luminance values. The electronic device 101 may identify the target luminance level 628. A difference between the target luminance level 628 and the central luminance level 627 may be a luminance shift value. The electronic device 101 may change luminance values of at least one pixel included in the first image from the first luminance values to the second luminance values based on the luminance shift value.

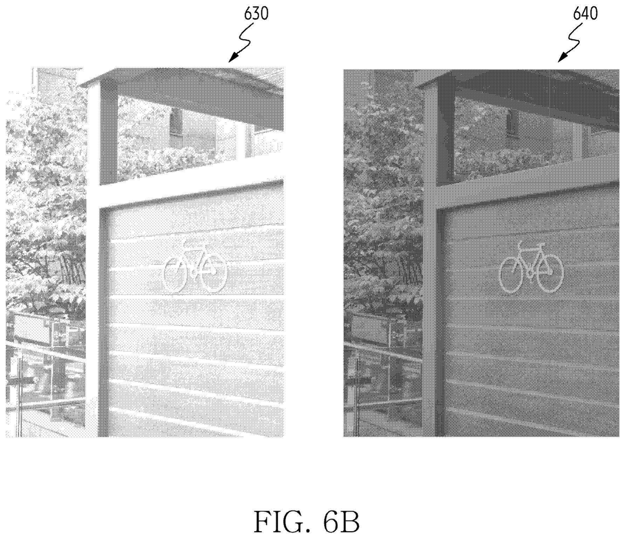

FIG. 6B represents images in accordance with luminance shift. In order to describe the luminance shift, the description of the operation 551 of FIG. 5B may be referenced.

Referring to FIG. 6B, according to an embodiment, a first image 630 may be an image before luminance shift, and the first image 630 may have first luminance values. A second image 640 may be an image after luminance shift, and the second image 640 may have second luminance values (luminance values after the luminance shift of FIG. 5B). One reason the first image 630 is brighter than the second image 640 is due to a haze phenomenon. Due to the haze phenomenon, light is diffused and/or scattered, and at least a part of the pixels is affected, so that an image may be obtained brighter than actual brightness. According to an embodiment, in order to lower overall brightened luminances, the electronic device 101 may perform luminance shift. As the first luminance values are converted by a difference between a central luminance level and a target luminance level of the first luminance values, the second luminance values may be obtained.

FIG. 6C represents an example of a conversion method for luminance limitation. In order to describe the luminance shift, the description of the operation 551 of FIG. 5B may be referenced.

Referring to FIG. 6C, a graph 650 represents a function in accordance with a conversion method. A horizontal axis 651 of the graph 650, which is an input, represents a difference between a central luminance level, which is a shift target, and a predetermined luminance level. The central luminance level represents a central value of a luminance level range of luminance values of an image that is a target of luminance shift. The central luminance level may correspond to an average of a minimum luminance level and a maximum luminance level of the luminance level range of the luminance values. For example, the central luminance level of {10, 11, ..., 254, 255} may be 132.5. The predetermined luminance level represents a central value of a range of a representable luminance level. For example, the predetermined luminance level may be 128 in a case that a range of a luminance level is [0, 255]. For example, the predetermined luminance level may be 0.5 in a case that the range of the luminance level is [0, 1].

A vertical axis 652 of the graph 650, which is an output, represents a difference between the central luminance level, which is the shift target, and a target luminance level. The target luminance level is a luminance level at which the central luminance level reaches and may be used as a central axis for contrast stretching to be described later. The target luminance level may be determined based on the difference between the central luminance level and the predetermined luminance level (e.g., 128). For example, a line 661 represents a first conversion method represented as y=x. In the first conversion method, the target luminance level may be the same as the predetermined luminance level. The electronic device 101 may perform luminance shift regardless of a degree of luminance change from an original image. For another example, a line 662 represents a second conversion method represented as y=ln(1+x). For still another example, a line 663 represents a third conversion method represented as $y=sqrt(x)=\sqrt{x}$ . In the second conversion method or the third conversion method, a distance from the central luminance level to the target luminance level is shorter than a distance from the central luminance level to the predetermined luminance level. In the second conversion method, the distance from the central luminance level to the target luminance level is shorter than the distance from the central luminance level to the predetermined luminance level. If luminance values of pixels are greatly lowered together, a degree of change in a represented image is large, and thus the electronic device 101 may limit the change. To this end, the electronic device 101 may perform luminance shift so as to move to the target luminance level without moving to the predetermined luminance level. According to an embodiment, the electronic device 101 may adaptively select a conversion method based on an image. For example, if an object (e.g., a person) is included in the image, the electronic device 101 may set the target luminance level through the third conversion method. If only background elements are included in the image without an object, the electronic device 101 may set the target luminance level through the first conversion method.

According to an embodiment, the electronic device 101 may set the target luminance level and perform luminance shift up to the target luminance level such that the luminance values of the pixels are not extremely changed in accordance with the luminance shift. In accordance with the image, there may be a photo without a dark region. As an example, in a case that a region such as the sky is captured, an image obtained by the electronic device 101 has a high probability of being falsely detected as a hazy photo. However, by limiting a luminance change, such as the second conversion method or the third conversion method, a problem of a bright sky becoming suddenly dark may be prevented.

FIG. 7 represents a relationship between luminance and red green blue (RGB) channels.

Referring to FIG. 7, an image may include a plurality of pixels. For example, the image may include n pixels. Each pixel may be represented in a YUV format. Each pixel may be represented as a luminance component Y representing brightness of light, and a first component U and a second component V representing chrominance. The image may have luminance values represented as a set of $\{y_1, y_2, ..., y_n\}$. $y_i$ represents a luminance value of an i-th pixel. The YUV format may be converted one-to-one to an RGB format, represented by three primary colors, red, green, and blue, without any loss. R channels of the image may be represented as a set of $\{a_1, a_2, ..., a_n\}$. $a_i$ represents an R channel value of the i-th pixel. G channels of the image may be represented as a set of $\{b_i, b_2, ..., b_n\}$. $b_i$ represents a G channel value of the i-th pixel. B channels of the image may be represented as a set of $\{c_1, c_2, ..., c_n\}$. $c_i$ represents a B channel value of the i-th pixel.

If a luminance component of a pixel is changed, a value of an R channel, a value of a G channel, and a value of a B channel of the pixel may be changed. As described through FIG. 5B, according to an embodiment, as the electronic device 101 changes luminance values to process an image with a haze phenomenon, the electronic device 101 is required to check how a value changes in each channel of the RGB channels due to the change in the luminance values. For example, if an R channel value of a specific pixel in an image exceeds 255 in accordance with luminance shift, the electronic device 101 sets the R channel value of the specific pixel to 255. According to an embodiment, distortion may occur in representation of the image due to saturation. Therefore, the electronic device 101 may check a maximum value and a minimum value of each channel of the RGB channels due to changes in luminance values through contrast stretching. According to an embodiment, the electronic device 101 may determine a scaling value to prevent over saturation in which the maximum value and the minimum value of each channel of the RGB channels do not exceed a range of an upper limit (e.g., 255) or a lower limit (e.g., 0). According to an embodiment, the electronic device 101 may widen an interval between luminance levels based on the scaling value such that a representation range of contrast is widened centered on a target luminance level to which luminance is shifted.

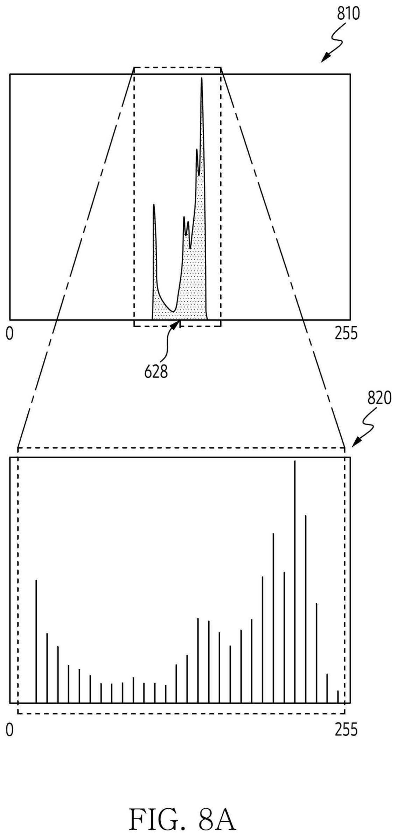

FIG. 8A represents an example of a graph in accordance with contrast stretching. In order to describe the contrast stretching, the description of the operation 553 of FIG. 5B may be referenced.

Referring to FIG. 8A, a graph 810 represents distribution of luminance values (e.g., second luminance values) for which process in accordance with luminance shift is performed. According to an embodiment, the graph 810 is a frequency graph indicating the distribution of the second luminance values as a histogram and then continuously representing a distribution result, and a horizontal axis represents a luminance level, and a vertical axis represents a frequency. A graph 820 represents distribution of luminance values (e.g., third luminance values) in which contrast stretching is performed. The graph 820 is a frequency graph indicating the distribution of the third luminance values as a histogram and then continuously representing a distribution result, and a horizontal axis represents a luminance level, and a vertical axis represents a frequency.

The electronic device 101 may identify a central luminance level of the second luminance values of a first image. The center luminance level of the second luminance values may correspond to a target luminance level 628 set for luminance shift. Due to a haze phenomenon, light may be diffused and/or scattered, and may affect pixels overall. For example, due to overall brightened luminances, a range of representable contrast may be narrower than a range of actual contrast. In order to widen the narrowed range of contrast, the electronic device 101 may perform contrast stretching. The electronic device 101 may widen an interval between luminance levels of the graph 810. The electronic device 101 may change luminance values corresponding to another luminance level using the target luminance level as a central axis. The electronic device 101 may change luminance values corresponding to another luminance level other than the target luminance level among the second luminance values. The electronic device 101 may obtain the third luminance values based on the changed luminance values and luminance values corresponding to the target luminance level. A range of luminance levels of the third luminance values of the graph 820 may be wider than a range of luminance levels of the second luminance values of the graph 810. The highest luminance value among the luminance levels of the third luminance values is greater than the highest luminance value among the luminance levels of the second luminance values. The lowest luminance value among the luminance levels of the third luminance values is smaller than the lowest luminance value among the luminance levels of the second luminance values.

As described in FIG. 7, the electronic device 101 may check an effect of a luminance change in accordance with contrast stretching on RGB channels. In order to increase color fidelity in each channel, the electronic device 101 may perform stretching in each channel of the RGB channels. According to an embodiment, in order not to distort an image due to the luminance change, the electronic device 101 may perform stretching based on all RGB channels having the same scaling value. The electronic device 101 may pre-check a change in a channel value in each of the RGB channels in accordance with the luminance change in order to prevent over saturation in at least one of the RGB channels or a phenomenon in which shadow or a highlight region disappears (blow out).

When luminance is changed, the electronic device 101 may perform space conversion for changing a YUV format to an RGB format in accordance with the changed luminance. The electronic device 101 may check a maximum value and a minimum value of each channel of the RGB channels based on a luminance shift value. The electronic device 101 may check the maximum value and the minimum value of each channel of the RGB channels based on the scaling value. Before performing contrast stretching, the electronic device 101 may determine whether a change in luminance in accordance with a candidate scaling value causes over saturation on at least one of the RGB channels. When the candidate scaling value does not cause over saturation, the electronic device 101 may perform the contrast stretching. According to an embodiment, the electronic device 101 may estimate a maximum value and a minimum value of the RGB channels in accordance with luminance shift and then perform the contrast stretching. As the luminance shift and the contrast stretching are performed at once as a series of operations, instead of conversion and inverse conversion between the YUV format and the RGB format, image processing speed may be improved.

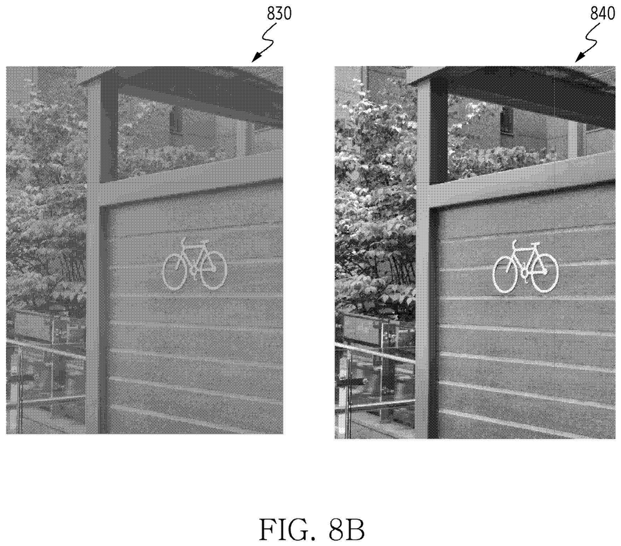

FIG. 8B represents images in accordance with contrast stretching. In order to describe the contrast stretching, the description of the operation 553 of FIG. 5B may be referenced.

Referring to FIG. 8B, a first image 830 is an image before contrast stretching, and the first image 830 may have second luminance values (luminance values after the luminance shift of FIG. 5B). A second image 840 is an image after contrast stretching, and the second image 840 may have third luminance values. It may be confirmed that a range of contrast represented in the second image 840 is wider than a range of contrast (e.g., a luminance level range) represented in the first image 830.

In FIGS. 8A to 8B, an example in which contrast stretching is performed to improve the haze phenomenon has been described. The electronic device 101 may display an image resulting from the contrast stretching through a display (e.g., a display module 160) without additional processing. The third luminance values may be the final luminance values of FIG. 5A. The electronic device 101 may generate a second image having the final luminance values. The electronic device 101 may display the generated second image through the display (e.g., the display module 160).

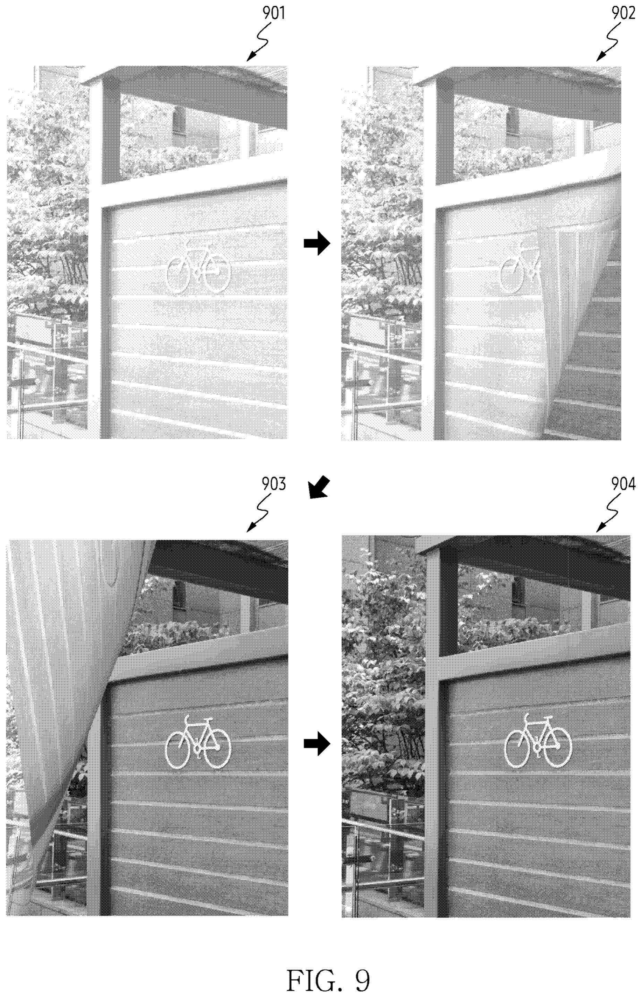

FIG. 9 represents an example of an animation of image processing.

Referring to FIG. 9, according to an embodiment, an electronic device 101 may represent an image 901 before a luminance change and an image 904 after the luminance change through various animation effects (e.g., 'peel off') to a user. According to an embodiment, the electronic device 101 may display the image 901. The image 901 may be an image (e.g., a first image) obtained through a camera by the electronic device 101. A haze phenomenon may be understood as all or at least a part of an image being covered with a layer that enhances brightness due to light scattering and absorption. According to an embodiment, after a certain time or based on a user input, the electronic device 101 may execute an animation. According to an embodiment, the electronic device 101 may display intermediate images (e.g., an image 902 and an image 903) through the animation. If the animation is completed, the electronic device 101 may display the image 904. The image 904 may be an image (e.g., a second image) obtained by the electronic device 101 changing luminance values of the image 901 through luminance shift and contrast stretching. According to an embodiment, other images may be displayed for image conversion between an image (e.g., the first image) before a luminance value is changed and an image (e.g., the second image) with the changed luminance value to display various conversion effects to the user.

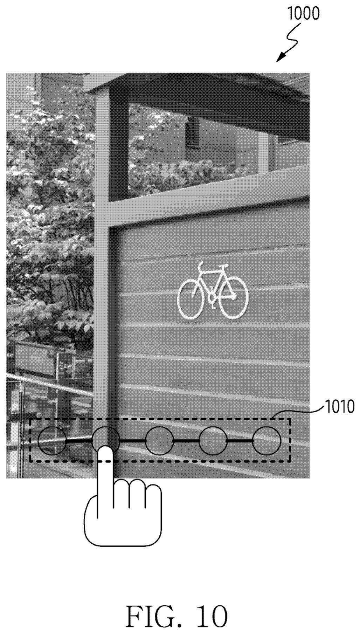

FIG. 10 represents an example of a user interface for image processing. In order to describe the image processing, the description of the operations of FIG. 5A may be referenced.

Referring to FIG. 10, an electronic device (e.g., an electronic device 101) may display a visual object 1010. According to an embodiment, the visual object 1010 may have a slide bar shape. According to an embodiment, the visual object 1010 may be used to represent a degree of a weight combination. For example, for each pixel, the electronic device 101 may perform a weight combination by applying a first weight $w_1$ to a value (e.g., a luminance value $y_1$) of a pixel of an original image (e.g., a first image), and applying a second weight $w_2$ to a value (e.g., a luminance value $y_2$) of the pixel of an image (e.g., a second image) in which luminance shift and contrast stretching have been performed. The electronic device 101 may obtain a combined value (e.g., a calculated luminance value $w_1y_1+w_2y_2$) for the pixel. As an example, a sum of the first weight and the second weight may be 1. The degree of the weight combination may represent the second weight (e.g., $w_2$) compared to a total weight (e.g., 1) when performing the weight combination. According to an embodiment, the electronic device 101 may perform a weight combination so as not to significantly change from the original image. According to an embodiment, the electronic device 101 may generate a new image (hereinafter, a third image) through a weight combination between the original image (e.g., the first image) and the image (e.g., the second image) in which the luminance shift and the contrast stretching have been performed. The electronic device 101 may generate the third image based on applying the first weight to the first image and applying the second weight to the second image. A ratio of the second weight to the first weight may be adjusted.

According to an embodiment, the visual object 1010 may represent the ratio of the second weight to the first weight. For example, a circle of the visual object 1010 may sequentially represent 0, 0.5, 1, 2, and $\Delta$. The electronic device 101 may display the first image, the second image, or the combined third image in response to a user input on the visual object 1010. For example, if the user input on the visual object 1010 indicates 0, the electronic device 101 may display the first image. For example, if the user input on the visual object 1010 indicates 0.5, the electronic device 101 may combine the first image and the second image in a ratio of 2:1. Specifically, the electronic device 101 may set a weight for a luminance value of a pixel included in the first image to be twice than a weight for a luminance value included in the second image. As an example, the electronic device 101 may obtain a first result by multiplying the luminance value of the pixel included in the first image by 2/3 and obtain a second result by multiplying the luminance value of the pixel included in the second image by 1/3. The electronic device 101 may generate the third image based on a luminance value obtained by adding the first result and the second result and may display the generated image. For example, if the user input on the visual object 1010 indicates 1, the electronic device 101 may combine the first image and the second image in a ratio of 1:1. As an example, the electronic device 101 may obtain the first result by multiplying the luminance value of the pixel included in the first image by 1/2 and obtain the second result by multiplying the luminance value of the pixel included in the second image by 1/2. The electronic device 101 may generate the third image based on the luminance value obtained by adding the first result and the second result and may display the generated image. If the user input on the visual object 1010 indicates 2, the electronic device 101 may combine the first image and the second image in a ratio of 1:2. As an example, the electronic device 101 may obtain the first result by multiplying the luminance value of the pixel included in the first image by 1/3, and obtain the second result by multiplying the luminance value of the pixel included in the second image by 2/3. The electronic device 101 may generate the third image based on the luminance value obtained by adding the first result and the second result and may display the generated image. If the user input on the visual object 1010 indicates $\Delta$, the electronic device 101 may display the second image. In addition to the ratio values described above, in a case that the user input is located in a region of a slide bar, the third image combined in accordance with a ratio of a weight corresponding to the region may be displayed.

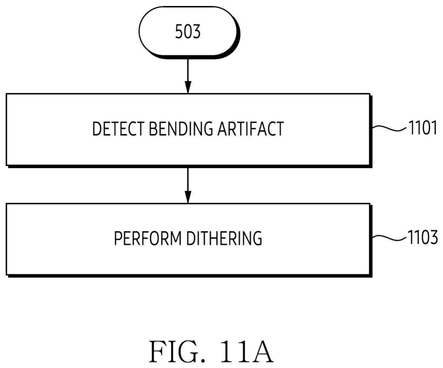

FIG. 11A represents an operation flow of an electronic device (e.g., an electronic device 101) for dithering. The electronic device 101 may perform additional processing after performing luminance shift and contrast stretching. In order to describe the luminance shift, the description of the operation 551 of FIG. 5B may be referenced. In order to describe the contrast stretching, the description of the operation 553 of FIG. 5B may be referenced. In FIG. 11A, an operation for additional processing after the contrast stretching is described.

Referring to FIG. 11A, in operation 1101, according to an embodiment, the electronic device 101 may detect a bending artifact. The bending artifact represents a phenomenon in which a layer is formed due to colors that are noticeably distinguished in a region where soft gradation is expected. The bending artifact may be referred to as color bending, a contour artifact, or a technical term equivalent thereto. For example, the electronic device 101 may detect the bending artifact through a luminance difference between adjacent pixels. According to an embodiment, the electronic device 101 may detect the bending artifact based on a comparison between an interval between luminance levels of luminance values (e.g., third luminance values) of an image with a threshold value. For example, the electronic device 101 may detect the bending artifact through a classifier based on a convolution neural network (CNN).

In operation 1103, according to an embodiment, the electronic device 101 may perform the dithering. The dithering may include an operation of adding a noise component to a region in which the bending artifact occurs or a region in which the layer occurs. According to an embodiment, the electronic device 101 may add a noise component to pixels corresponding to the region among pixels of an image. For example, the electronic device 101 may obtain fourth luminance values changed based on the dithering. Final luminance values of a second image displayed through a display may include the fourth luminance values changed based on the dithering. According to an embodiment, as the noise component is added, a difference between luminance values of the pixels may be reduced. According to an embodiment, the reduced difference between the luminance values may provide a visually continuous color effect to a user in the region.

In FIG. 11A, an embodiment of resolving the bending artifact through a dithering effect has been described, but embodiments of the present disclosure are not limited thereto. Unlike FIG. 11A, according to an embodiment, the electronic device 101 may perform a weight combination between an original image (e.g., an image corresponding to first luminance values) and an image (e.g., an image corresponding to third luminance values) in which luminance shift and contrast stretching have been performed, based on detecting the bending artifact.

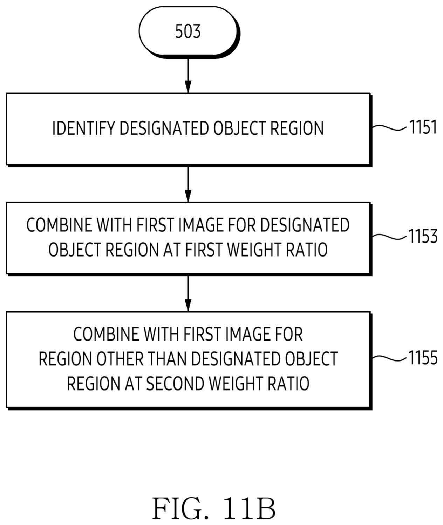

FIG. 11B represents an operation flow of an electronic device (e.g., an electronic device 101) for weight processing. According to an embodiment, the electronic device 101 may perform additional processing after performing luminance shift and contrast stretching. In order to describe the luminance shift, the description of the operation 551 of FIG. 5B may be referenced. In order to describe the contrast stretching, the description of the operation 553 of FIG. 5B may be referenced. In FIG. 11B, an operation for additional processing after the contrast stretching is described.

Referring to FIG. 11B, in operation 1151, the electronic device 101 may identify a designated object region. For example, the designated object region may be a region corresponding to a face in an image. According to an embodiment, a user may not want to increase details by blurring the face rather than revealing an outline of the face. When combining luminance values (e.g., first luminance values) of an original image (e.g., a first image) and luminance values (e.g., third luminance values) of an image in which contrast stretching has been performed, the electronic device 101 may set a weight ratio for the designated region differently from a weight ratio of another region.

In operation 1153, the electronic device 101 may perform a combination with the first image for the designated object region at a first weight ratio. According to an embodiment, the first weight ratio represents a second weight applied to a part corresponding to the object region among the third luminance values for a first weight applied to a part corresponding to the object region among the first luminance values. In the first weight ratio, the first weight may be set to be higher than the second weight. For example, the designated object region may be a face region. The first weight may be set higher than the second weight so that high brightness is maintained for the face region. According to an embodiment, by applying more weight to the face region, an image in which an improvement effect of a haze phenomenon is alleviated in a face part compared to a background region may be displayed to the user. For example, the electronic device 101 may analyze an object included in an image, set the weights differently in accordance with a characteristic of the object, and generate a second image in which brightness is corrected differently for each object based on a weight.

In operation 1155, the electronic device 101 may perform a combination with the first image for regions other than the designated object region at a second weight ratio. According to an embodiment, the second weight ratio represents a fourth weight applied to a part corresponding to the region among the third luminance values for a third weight applied to a part corresponding to the region among the first luminance values. According to an embodiment, in the second weight ratio, the fourth weight may be set to be higher than the third weight. For example, the region other than the designated object region may be a background region. The fourth weight may be set to be higher than the third weight so as to have a wide luminance level range for the background region.

According to an embodiment, for each pixel, the electronic device 101 may obtain fourth luminance values through a weight-sum of a luminance value of the original image (e.g., the first image) and a luminance value changed in accordance with luminance shift and contrast stretching. Final luminance values of the second image displayed through a display may include the fourth luminance values.

In FIG. 11B, an example of combining the original image (e.g., the first image) and pixel values at different weight ratios has been described, but embodiments of the present disclosure are not limited thereto. Using the first luminance values of the first image for the face region and the third luminance values for the background region may also be understood as an embodiment of the present disclosure.

The haze phenomenon in the present disclosure may be caused by a substance on a window disposed above a camera (e.g., a camera module 180). Transmittance of the electronic device (e.g., the electronic device 101) to the window may be measured. Based on a measurement result of the transmittance, a haze level and required parameters (e.g., a luminance shift value, a scaling value, and a weight ratio) for the window may be calculated in advance. Parameters required for each transmittance of the window may be defined as a table. According to an embodiment, the electronic device 101 may identify the parameters based on the window mounted on the electronic device 101 based on the table. The electronic device 101 may change obtained luminances of an image, based on the parameters.

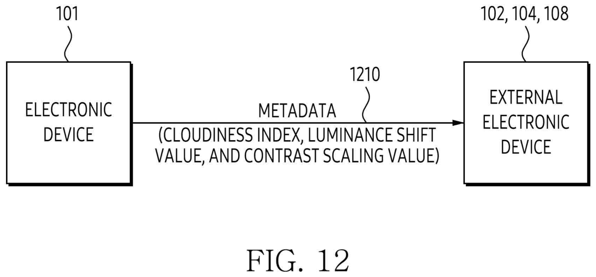

FIG. 12 represents sharing of parameters for image processing.

Referring to FIG. 12, an electronic device 101 may transmit metadata 1210 to an external electronic device (e.g., an electronic device 102, an electronic device 104, or a server 108). In the present disclosure, luminance shift and contrast stretching performed to improve a haze phenomenon are point-to-point image processing. Since there is no operation such as convolution, a luminance change of an image may be reversibly performed through a luminance shift value applied to an original image (e.g., a first image) or a scaling value (hereinafter, a contrast scaling value) for the contrast stretching. For example, the electronic device 101 may obtain final luminance values of a second image displayed in accordance with a result of the contrast stretching, and first luminance values again through the luminance shift value and the contrast scaling value.

The metadata 1210 may include the luminance shift value and the contrast scaling value. According to an additional embodiment, the metadata may further include a haze index. According to an additional embodiment, the metadata may further include a weight ratio. The electronic device 101 enables the external electronic device 102, 104, or 108 to perform the image processing operation described through FIGS. 3 to 11B, by providing the metadata 1210 to the external electronic device 102, 104, or 108. For example, the electronic device 101 may transmit the luminance shift value and the contrast scaling value to the external electronic device 102, 104, or 108. The electronic device 101 may transmit image information (e.g., the first image which is the original image or the second image in accordance with the luminance change) to the external electronic device 102, 104, or 108. As an example, the external electronic device 102, 104, or 108 may obtain the first image having the first luminance values based on the second image, the luminance shift value, and the contrast scaling value. In addition to restoring the original image, the external electronic device 102, 104, or 108 may obtain a weighted combined image (e.g., the third image of FIG. 10). As another example, based on the luminance shift value and the contrast scaling value, the external electronic device 102, 104, or 108 may perform a weight combination between the original image (e.g., the first image) and the image (e.g., the second image) in which luminance shift and contrast stretching have been performed. As described through FIG. 10, the external electronic device 102, 104, or 108 may display a visual object 1010 and generate a combined image in accordance with a weight ratio in accordance with a user input.

Embodiments of the present disclosure provide a technique for detecting a haze phenomenon from an image obtained through a camera and solving a contrast problem lowered by the haze phenomenon through processing the obtained image. According to the technology, the electronic device may automatically detect the haze phenomenon with only a single frame image without multiple frames and provide a user with an image with increased clarity. Perceived quality of the obtained image may be improved through luminance shift and contrast stretching. In addition, due to the technology, a more advantageous effect may be provided in a type of electronic device in which a display of a specific material (e.g., a polyethylene terephthalate (PET) material) is disposed above a camera module, such as a foldable or flexible display.

The effects that may be obtained from the present disclosure are not limited to those described above, and any other effects not mentioned herein will be clearly understood by those having ordinary knowledge in the art to which the present disclosure belongs, from the following description.

In embodiments, an electronic device is provided. The electronic device may include a camera, a display, and at least one processor. The at least one processor may be configured to obtain a first image having first luminance values through the camera. The at least one processor may be configured to obtain a haze level in accordance with a designated lower ratio of the first luminance values of the first image. The at least one processor may be configured to display, through the display, a second image having final luminance values based on identifying that the haze level is equal to or greater than a threshold. The final luminance values may be obtained based on luminance shift for converting the first luminance values in accordance with a difference between a central luminance level of the first luminance values and a target luminance level, and contrast stretching for scaling an interval between luminance levels from the target luminance level.

According to an embodiment, the first luminance values may include a luminance value of each of the pixels of the first image. The designated lower ratio may represent a ratio of a number of pixels accumulated from the lowest luminance to a total number of the pixels of the first image.

According to an embodiment, the at least one processor may be further configured to display, through the display, the first image, based on identifying that the haze level is less than the threshold.

According to an embodiment, the central luminance level may be an average of a minimum luminance level and a maximum luminance level among a luminance level range of the first luminance values.

According to an embodiment, to display the second image, the at least one processor may be configured to obtain second luminance values from the first luminance values based on a difference between the central luminance level and the target luminance level. To display the second image, the at least one processor may be configured to obtain third luminance values from the second luminance values based on a scaling value for the contrast stretching.

According to an embodiment, to obtain the second luminance values, the at least one processor may be configured to determine the target luminance level based on a designated conversion method. The designated conversion method may be used to obtain a difference between the target luminance level and the central luminance level from a difference between the central luminance level and a predetermined luminance level.

According to an embodiment, the designated conversion method may include a square root function that uses the difference between the central luminance level and the predetermined luminance level as an input and uses the difference between the target luminance level and the central luminance level as an output.

According to an embodiment, to obtain the third luminance values, the at least one processor may be configured to obtain a maximum value and a minimum value in each of the red, green, and blue (RGB) channels based on the second luminance values. To obtain the third luminance values, the at least one processor may be configured to determine the scaling value for the contrast stretching based on the maximum value and the minimum value in each of the RGB channels.

According to an embodiment, to obtain the third luminance values, the at least one processor may be configured to change luminance values corresponding to a luminance level different from the target luminance level among the second luminance values based on the scaling value. To obtain the third luminance values, the at least one processor may be configured to obtain the third luminance values based on the changed luminance values and luminance values corresponding to the target luminance level.

According to an embodiment, a luminance level of a high luminance value in accordance with a designated upper ratio of the third luminance values may be less than an upper limit of a luminance level.

According to an embodiment, the final luminance values displayed through the display may correspond to the third luminance values resulting from the contrast stretching.

According to an embodiment, to display the second image, the at least one processor may be configured to detect a banding artifact based on an interval between luminance levels of the third luminance values. To display the second image, the at least one processor may be configured to obtain the final luminance values based on dithering for adding a noise component to at least a part of the third luminance values.

According to an embodiment, to display the second image, the at least one processor may be configured to obtain the final luminance values by applying a first weight to the first luminance values and a second weight to the third luminance values. To display the second image, the at least one processor may be configured to generate the second image having the final luminance values.

According to an embodiment, to display the second image, the at least one processor may be configured to identify a designated object region from the first image. To display the second image, the at least one processor may be configured to perform a combination with the first image for the designated object region based on a first weight ratio. To display the second image, the at least one processor may be configured to perform a combination with the first image for regions other than the designated object region based on a second weight ratio. A weight applied to the first image in accordance with the first weight ratio may be greater than a weight applied to the first image in accordance with the second weight ratio.

According to an embodiment, the at least one processor may be configured to display, through the display, a visual object for indicating a plurality of weight ratios. The at least one processor may be configured to receive a user input for indicating a specific weight ratio among the plurality of weight ratios. The at least one processor may be further configured to, in response to the user input, display, through the display, a third image, by applying the first weight to the first luminance values and applying the second weight to the third luminance values, based on the specific weight ratio.

According to an embodiment, the electronic device may further include communication circuitry. The at least one processor may be further configured to transmit a message including a luminance shift value corresponding to the difference between the central luminance level and the target luminance level and the scaling value to an external electronic device through the communication circuitry.

In embodiments, a method performed by an electronic device is provided. The method may include obtaining a first image having first luminance values through a camera. The method may include obtaining a haze level in accordance with a designated lower ratio of the first luminance values of the first image. The method may include displaying, through a display, a second image having final luminance values based on identifying that the haze level is equal to or greater than a threshold. The final luminance values may be obtained in the electronic device based on luminance shift for converting the first luminance values in accordance with a difference between a central luminance level of the first luminance values and a target luminance level, and contrast stretching for scaling an interval between luminance levels from the target luminance level.

In embodiments, a non-transitory computer-readable medium is provided. The non-transitory computer-readable medium may include memory storing instructions. The instructions, when executed by a processor, may cause an electronic device to obtain a first image having first luminance values through a camera, obtain a haze level in accordance with a designated lower ratio of the first luminance values of the first image, and display, through a display, a second image having final luminance values based on identifying that the haze level is equal to or greater than a threshold. The final luminance values may be obtained in the electronic device based on luminance shift for converting the first luminance values in accordance with a difference between a central luminance level of the first luminance values and a target luminance level, and contrast stretching for scaling an interval between luminance levels from the target luminance level.

According to an embodiment, the instructions, when executed by the processor, may cause the electronic device to obtain second luminance values from the first luminance values based on a difference between the central luminance level and the target luminance level, and obtain third luminance values from the second luminance values based on a scaling value for the contrast stretching.

According to an embodiment, the instructions, when executed by the processor, may cause the electronic device to obtain the final luminance values by applying a first weight to the first luminance values and a second weight to the third luminance values. The instructions, when executed by the processor, may cause the electronic device to generate the second image having the final luminance values.

In embodiments, an electronic device is provided. The electronic device may include a camera, a display, and at least one processor. The at least one processor may be configured to obtain a first image having first luminance values through the camera. The at least one processor may be configured to obtain a haze level in accordance with a designated lower ratio of the first luminance values of the first image. The at least one processor may be configured to identify whether the haze level is equal to or greater than a threshold. The at least one processor may be configured to display, through the display, the first image, in a case that the haze level is less than the threshold. The at least one processor may be configured to display, through the display, a second image having final luminance values, in a case that the haze level is equal to or greater than the threshold. The lowest luminance level among luminance levels of the final luminance values may be lower than luminance levels of the first luminance values. A luminance level range of the final luminance values may be wider than a luminance level range of the first luminance values.

In embodiments, an electronic device may include a camera, a display, at least one processor, and memory storing instructions. The instructions, when executed by the at least one processor, may cause the electronic device to obtain a first image having first luminance values through the camera, obtain a haze level in accordance with a designated lower ratio of the first luminance values of the first image, and display, through the display, a second image having final luminance values based on identifying that the haze level is equal to or greater than a threshold. The final luminance values may be obtained based on luminance shift for converting the first luminance values in accordance with a difference between a central luminance level of the first luminance values and a target luminance level, and contrast stretching for scaling an interval between luminance levels from the target luminance level.

According to an embodiment, to display the second image, the instructions, when executed by the at least one processor, may cause the electronic device to obtain second luminance values from the first luminance values based on a difference between the central luminance level and the target luminance level, and obtain third luminance values from the second luminance values based on a scaling value for the contrast stretching.

According to an embodiment, to obtain the second luminance values, the instructions, when executed by the at least one processor, may cause the electronic device to determine the target luminance level based on a designated conversion method, and the designated conversion method may be used to obtain a difference between the target luminance level and the central luminance level from a difference between the central luminance level and a predetermined luminance level.

According to an embodiment, to obtain the third luminance values, the instructions, when executed by the at least one processor, may cause the electronic device to obtain a maximum value and a minimum value in each of the red, green, and blue (RGB) channels based on the second luminance values, and determine the scaling value for the contrast stretching based on the maximum value and the minimum value in each of the RGB channels.

According to an embodiment, to obtain the third luminance values, the instructions, when executed by the at least one processor, may cause the electronic device to change luminance values corresponding to a luminance level different from the target luminance level among the second luminance values based on the scaling value, and obtain the third luminance values based on the changed luminance values and luminance values corresponding to the target luminance level.

According to an embodiment, to display the second image, the instructions, when executed by the at least one processor, may cause the electronic device to detect a banding artifact based on an interval between luminance levels of the third luminance values, and obtain the final luminance values based on dithering for adding a noise component to at least a part of the third luminance values.

According to an embodiment, to display the second image, the instructions, when executed by the at least one processor, may cause the electronic device to obtain the final luminance values by applying a first weight to the first luminance values and a second weight to the third luminance values, and generate the second image having the final luminance values.

According to an embodiment, to display the second image, the instructions, when executed by the at least one processor, may cause the electronic device to identify a designated object region from the first image, perform a combination with the first image for the designated object region based on a first weight ratio, and perform a combination with the first image for regions other than the designated object region based on a second weight ratio. A weight applied to the first image in accordance with the first weight ratio may be greater than a weight applied to the first image in accordance with the second weight ratio.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device comprising:

   a camera;
   a display;
   at least one processor; and
   memory storing instructions,
   wherein the instructions, when executed by the at least one processor, cause the electronic device to:

      obtain a first image having first luminance values through the camera;
      obtain a haze level in accordance with a designated lower ratio of the first luminance values of the first image; and
      display, through the display, a second image having final luminance values based on identifying that the haze level is equal to or greater than a threshold; and
wherein the final luminance values are obtained based on:

luminance shift for converting the first luminance values in accordance with a difference between a central luminance level of the first luminance values and a target luminance level, and
contrast stretching for scaling an interval between luminance levels from the target luminance level.

2. The electronic device of claim 1,

wherein the first luminance values include a luminance value of each of pixels of the first image, and
wherein the designated lower ratio represents a ratio of a number of pixels accumulated from a lowest luminance to a total number of the pixels of the first image.

3. The electronic device of claim 1,
wherein the central luminance level is an average of a minimum luminance level and a maximum luminance level among a luminance level range of the first luminance values.

4. The electronic device of claim 1,
wherein, to display the second image, the instructions, when executed by the at least one processor, cause the electronic device to:

obtain second luminance values from the first luminance values based on a difference between the central luminance level and the target luminance level; and
obtain third luminance values from the second luminance values based on a scaling value for the contrast stretching.

5. The electronic device of claim 4,
wherein, to obtain the second luminance values, the instructions, when executed by the at least one processor, cause the electronic device to:

determine the target luminance level based on a designated conversion method,
wherein the designated conversion method is used to obtain a difference between the target luminance level and the central luminance level from a difference between the central luminance level and a predetermined luminance level.

6. The electronic device of claim 5,
wherein the designated conversion method includes a square root function that uses the difference between the central luminance level and the predetermined luminance level as an input and uses the difference between the target luminance level and the central luminance level as an output.

7. The electronic device of claim 4,
wherein, to obtain the third luminance values, the instructions, when executed by the at least one processor, cause the electronic device to:

obtain a maximum value and a minimum value in each of red, green, and blue (RGB) channels based on the second luminance values; and
determine the scaling value for the contrast stretching based on the maximum value and the minimum value in each of the RGB channels.

8. The electronic device of claim 4,
wherein, to obtain the third luminance values, the instructions, when executed by the at least one processor, cause the electronic device to:

change luminance values corresponding to a luminance level different from the target luminance level among the second luminance values based on the scaling value; and
obtain the third luminance values based on the changed luminance values and luminance values corresponding to the target luminance level.

9. The electronic device of claim 8,
wherein a luminance level in accordance with a designated upper ratio of the third luminance values is less than an upper limit of a luminance level.

10. The electronic device of claim 4,
wherein the final luminance values displayed through the display correspond to the third luminance values resulting from the contrast stretching.

11. The electronic device of claim 4,
wherein, to display the second image, the instructions, when executed by the at least one processor, cause the electronic device to:

detect a banding artifact based on an interval between luminance levels of the third luminance values; and
obtain the final luminance values based on dithering for adding a noise component to at least a part of the third luminance values.

12. The electronic device of claim 4,
wherein, to display the second image, the instructions, when executed by the at least one processor, cause the electronic device to:

obtain the final luminance values by applying a first weight to the first luminance values and a second weight to the third luminance values; and

generate the second image having the final luminance values.

13. The electronic device of claim 4,
   wherein, to display the second image, the instructions, when executed by the at least one processor, cause the electronic device to:

   identify a designated object region from the first image;
   perform a combination with the first image for the designated object region based on a first weight ratio; and
   perform a combination with the first image for a region other than the designated object region based on a second weight ratio,
   wherein a weight applied to the first image in accordance with the first weight ratio is greater than a weight applied to the first image in accordance with the second weight ratio.

14. A method performed by an electronic device, the method comprising:

   obtaining a first image having first luminance values through a camera;
   obtaining a haze level in accordance with a designated lower ratio of the first luminance values of the first image; and
   displaying, through a display, a second image having final luminance values based on identifying that the haze level is equal to or greater than a threshold, and
   wherein the final luminance values are obtained based on:

   luminance shift for converting the first luminance values such that a central luminance level of the first luminance values becomes a target luminance level, and
   contrast stretching for scaling an interval between luminance levels from the target luminance level.

15. A non-transitory computer-readable medium comprising memory storing instructions,
   wherein the instructions, when executed by a processor, cause an electronic device to:

   obtain a first image having first luminance values through a camera;
   obtain a haze level in accordance with a designated lower ratio of the first luminance values of the first image; and

display, through a display, a second image having final luminance values based on identifying that the haze level is equal to or greater than a threshold; and
wherein the final luminance values are obtained in the electronic device based on:

   luminance shift for converting the first luminance values in accordance with a difference between a central luminance level of the first luminance values and a target luminance level, and
   contrast stretching for scaling an interval between luminance levels from the target luminance level.

FIG. 1

200

## CAMERA MODULE 180

LENS ASSEM-BLY 210

FLASH 220

IMAGE SENSOR 230

IMAGE STABILIZER 240

MEMORY 250

IMAGE SIGNAL PROCESSOR 260

# FIG. 2

FIG. 3

FIG. 4

```
┌──────────────────────────────────────┐
│   OBTAIN FIRST IMAGE HAVING           │── 501
│   FIRST LUMINANCE VALUES              │
└──────────────────────────────────────┘
                  │
                  ▼
┌──────────────────────────────────────┐
│   OBTAIN HAZE LEVEL                   │── 503
└──────────────────────────────────────┘
                  │
                  ▼
┌──────────────────────────────────────┐
│ DISPLAY SECOND IMAGE HAVING FINAL     │
│ LUMINANCE VALUES BASED ON IDENTIFYING │── 505
│ THAT HAZE LEVEL IS EQUAL TO OR        │
│ GREATER THAN THRESHOLD                │
└──────────────────────────────────────┘
```

FIG. 5A

LUMINANCE SHIFT SUCH THAT CENTRAL LUMINANCE LEVEL BECOMES TARGET LUMINANCE LEVEL — 551

CONTRAST STRETCHING FOR SCALING INTERVALS BETWEEN LUMINANCE LEVELS FROM TARGET LUMINANCE LEVEL — 553

FIG. 5B

FIG. 6A

FIG. 6B

FIG. 6C

721

R $\{a_1,a_2, \dots a_n\}$

710

Y

$\{y_1,y_2, \dots y_n\}$

722

G $\{b_1,b_2, \dots b_n\}$

723

B $\{c_1,c_2, \dots c_n\}$

FIG. 7

FIG. 8A

FIG. 8B

FIG. 9

FIG. 10

503

DETECT BENDING ARTIFACT —1101

PERFORM DITHERING —1103

FIG. 11A

503

IDENTIFY DESIGNATED OBJECT REGION — 1151

COMBINE WITH FIRST IMAGE FOR DESIGNATED
OBJECT REGION AT FIRST WEIGHT RATIO — 1153

COMBINE WITH FIRST IMAGE FOR
REGION OTHER THAN DESIGNATED OBJECT
REGION AT SECOND WEIGHT RATIO — 1155

FIG. 11B

101

ELECTRONIC
DEVICE

1210

METADATA
(CLOUDINESS INDEX, LUMINANCE SHIFT
VALUE, AND CONTRAST SCALING VALUE)

102, 104, 108

EXTERNAL
ELECTRONIC
DEVICE

FIG. 12

## INTERNATIONAL SEARCH REPORT

| International application No. |
|---|
| **PCT/KR2024/006390** |

| | |
|---|---|
| **A.** | **CLASSIFICATION OF SUBJECT MATTER** |
| | **G09G 5/10**(2006.01)i; **G09G 3/20**(2006.01)i; **H04N 23/72**(2023.01)i |

According to International Patent Classification (IPC) or to both national classification and IPC

| | |
|---|---|
| **B.** | **FIELDS SEARCHED** |

Minimum documentation searched (classification system followed by classification symbols)

G09G 5/10(2006.01); G06T 5/00(2006.01); G06T 5/40(2006.01); G09G 3/20(2006.01); H04N 13/00(2006.01); H04N 19/597(2014.01); H04N 5/57(2006.01); H04N 9/07(2006.01); H04N 9/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 휘도(luminance), 콘트라스트 스트레칭(contrast stretching), 헤이즈 레벨(haze level), 밴딩 아티팩트(banding artifact), 디더링(dithering), 객체(object)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-1814806 B1 (LG INNOTEK CO., LTD.) 04 January 2018 (2018-01-04)<br>See paragraphs [0002], [0024]-[0032], [0050] and [0052]; claim 1; and figures 2-4. | 1-15 |
| Y | KR 10-2007-0117424 A (UNIVERSITY-INDUSTRY COOPERATION GROUP OF KYUNG HEE UNIVERSITY) 12 December 2007 (2007-12-12)<br>See paragraphs [0033], [0095], [0101] and [0122]-[0123]; and figures 4b and 12. | 1-15 |
| Y | KR 10-1418391 B1 (KYUNGPOOK NATIONAL UNIVERSITY INDUSTRY-ACADEMIC COOPERATION FOUNDATION) 11 July 2014 (2014-07-11)<br>See claim 1. | 7 |
| Y | KR 10-2017-0141236 A (APPLE INC.) 22 December 2017 (2017-12-22)<br>See paragraph [0042]. | 11 |
| Y | KR 10-2017-0006969 A (SAMSUNG ELECTRONICS CO., LTD.) 18 January 2017 (2017-01-18)<br>See claims 1 and 7. | 13 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 August 2024** | **29 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006390**

| Patent document cited in search report | | | Publication date (day/month/year) | Patent family member(s) | | | Publication date (day/month/year) |
|---|---|---|---|---|---|---|---|
| KR | 10-1814806 | B1 | 04 January 2018 | KR 10-2013-0002698 | | A | 08 January 2013 |
| KR | 10-2007-0117424 | A | 12 December 2007 | KR | 10-0794909 | B1 | 14 January 2008 |
| KR | 10-1418391 | B1 | 11 July 2014 | None | | | |
| KR | 10-2017-0141236 | A | 22 December 2017 | AU | 2016-270443 | A1 | 30 November 2017 |
| | | | | AU | 2016-270443 | B2 | 03 January 2019 |
| | | | | CN | 107690811 | A | 13 February 2018 |
| | | | | CN | 107690811 | B | 04 August 2020 |
| | | | | EP | 3304881 | A1 | 11 April 2018 |
| | | | | EP | 3304881 | B1 | 10 August 2022 |
| | | | | JP | 2018-524863 | A | 30 August 2018 |
| | | | | JP | 6574270 | B2 | 11 September 2019 |
| | | | | US | 10089960 | B2 | 02 October 2018 |
| | | | | US | 10249263 | B2 | 02 April 2019 |
| | | | | US | 2016-0358346 | A1 | 08 December 2016 |
| | | | | US | 2016-0358584 | A1 | 08 December 2016 |
| | | | | WO | 2016-197033 | A1 | 08 December 2016 |
| KR | 10-2017-0006969 | A | 18 January 2017 | CN | 106340275 | A | 18 January 2017 |
| | | | | CN | 106340275 | B | 12 January 2021 |
| | | | | US | 10360847 | B2 | 23 July 2019 |
| | | | | US | 2017-0011692 | A1 | 12 January 2017 |
| | | | | WO | 2017-010709 | A1 | 19 January 2017 |

Form PCT/ISA/210 (patent family annex) (July 2022)